(19) Europäisches Patentamt
European Patent Office
Office européen des brevets

(11) **EP 1 788 001 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(51) Int Cl.:
**C08F 2/20** (2006.01)

(21) Anmeldenummer: **06123839.0**

(22) Anmeldetag: **10.11.2006**

(54) **Verfahren zur Herstellung polyvinylalkoholstabilisierter Latices**

Process for the preparation of polyvinyl alcohol stabilized latices

Procédé de preparation de latices stabilisés par de l'alcool polyvinylique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.11.2005 DE 102005054904**

(43) Veröffentlichungstag der Anmeldung:
**23.05.2007 Patentblatt 2007/21**

(73) Patentinhaber: **Wacker Chemie AG**
**81737 München (DE)**

(72) Erfinder: **Weitzel, Hans-Peter**
**84571, Reischach (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A- 1 420 033      DE-A1- 10 335 958**
**DE-A1- 19 645 427      DE-A1- 19 803 098**

Bemerkungen:
Die Akte enthält technische Angaben, die nach dem Eingang der Anmeldung eingereicht wurden und die nicht in dieser Patentschrift enthalten sind.

EP 1 788 001 B1

**Beschreibung**

Die Erfindung betrifft ein Verfahren zur Herstellung von in Wasser redispergierbaren Polymerpulverzusammensetzungen aus polyvinylalkoholstabilisierten Polymerdispensionen.

Polymerisate auf Basis von Vinylester, Vinylchlorid, (Meth)-acrylatmonomeren, Styrol, Butadien und Ethylen werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate eingesetzt. Zur Stabilisierung dieser Polymerisate werden Schutzkolloide oder seltener niedermolekulare oberflächenaktive Verbindungen eingesetzt. Als Schutzkolloide werden in der Regel Polyvinylalkohole eingesetzt.

Diese Produkte finden insbesondere Verwendung als Bindemittel in hydraulisch abbindenden Klebstoffen wie in Fliesenklebern auf Basis von Zementen oder Gips.

Die Herstellung der Dispersionspulver erfolgt beispielsweise durch Sprühtrocknung oder Gefriertrocknung von wässrigen Latices. Als Ausgangsmaterial dienen Dispersionen, die durch Emulsionspolymerisation hergestellt werden. Zur Stabilisierung werden in diesem Fall überwiegend Polyvinylalkohole eingesetzt. Bei der Emulsionspolymerisation werden dabei beträchtliche Wärmemengen frei, die durch Abfuhr über das wässrige Medium an die Reaktorwand und dann an das dort anliegende Kühlmedium abgegeben werden muss. Die Emulsionspolymerisation zeichnet sich gegenüber Masse- oder Lösungspolymerisationen durch ein besseres Wärmetransferverhalten aus. Dennoch sind auf Grund der enormen Energiemenge zeitliche Einschränkungen bei der Produktion zu machen, um die Polymerisationstemperatur nicht durch mangelnde Wärmeabfuhr über den vorgegebenen Wert ansteigen zu lassen. Temperaturen über 100°C sind üblicherweise nicht vorgesehen, da dies auf Grund des Siedepunktes von Wasser nur in druckfesten Reaktoren geschehen kann. Außerdem nimmt die Polymerisationstemperatur erheblichen Einfluss auf die makromolekularen Eigenschaften des Produktes und somit auch auf die anwendungstechnischen Eigenschaften. In den meisten Fällen werden diese Eigenschaften, durch die bei steigender Temperatur sinkenden Molekulargewichte, negativ verändert.

In der Patentschrift DE 103 35 958 A1 wird ein Verfahren zur Herstellung von Polymerlatices beschrieben, das bei einer Temperatur Ts die Polymerisation einleitet und bei einer Temperatur Te beendet. Erfindungswesentlich ist die Verwendung von öllöslichen Initiatoren. Die beschriebenen Dispersionen sind üblicherweise emulgatorstabilisiert und in dieser Form nicht zur Herstellung von Dispersionspulvern geeignet.

Die DE 198 03 098 A1 betrifft ein Verfahren zur Herstellung von sehr feinteiligen Polymerisaten, wobei die Polymerisation nach Einwirkung hoher Scherkräfte nach dem Mikrosuspensions- oder Mikroemulsions-Polymerisationsverfahren durchgeführt wird, und zur Kontrolle des Molekulargewichtes im Beisein eines stabilen N-Oxyl-Radikals polymerisiert wird.

Es bestand daher die Aufgabe, ein ökonomischeres Verfahren zu entwickeln, welches die Polymerisationswärme effizient abführt und zu Dispersionen führt, die für die Herstellung von Redispersionspulvern geeigneten sind.

Diese Aufgabe konnte dadurch gelöst werden, dass ein Verfahren entwickelt wurde, welches eine Polymerisation bei höheren Temperaturen erlaubt, ohne jedoch einen negativen Einfluss auf die Eigenschaften der Produkte zu zeigen.

Gegenstand der Erfindung ist ein Verfahren gemäß Anspruch 1.

Überraschenderweise werden bei dem erfindungsgemäßen Verfahren Polymere erhalten, die nur geringfügig niedrigere Molekulargewichte besitzen, aber dennoch zu vollwertigen anwendungstechnischen Eigenschaften führen. Es wird nicht wie bei DE 103 35 958 A1 eine besondere Initiatorführung und -art benötigt, sondern es kann in bekannter Weise gearbeitet werden.

Insbesondere können die üblichen wasserlöslichen Initiatoren verwendet werden, da öllösliche Initiatoren in der Emulsionspolymerisation üblicherweise auf Grund des schlechten Transportes über die Wasserphase weniger effizient sind. Der große Vorteil zeigt sich also darin, dass das erfindungsgemäße Verfahren, eine wesentlich wirtschaftlichere Herstellung der gewünschten Produkte, ohne Einbußen auf ihre Qualität und Leistungsfähigkeit, ermöglicht.

Überraschenderweise wurde auch gefunden, dass bei Temperaturen über 140°C mit Polyvinylalkohol als Stabilisatoren, keine beziehungsweise sehr instabile Dispersionen erhalten werden.

Als Ursache für diesen überraschenden Effekt gibt es zwei mögliche Erklärungen. Bei Temperaturen über 140°C kann auch in gepufferten Systemen eine Verseifung des üblicherweise teilverseiften Polyvinylalkohols zu vollverseiftem Polyvinylalkohol stattfinden. Letzter stabilisiert, wie dem Fachmann geläufig ist, deutlich schlechter. Außerdem kann bei diesen Temperaturen je nach Typ des verwendeten Polyvinylalkohols der Trübungspunkt erreicht werden. Die zweite Erklärung ist, dass an diesem Punkt der Polyvinylalkohol vollständig oder partiell aus der wässrigen Phase ausfällt und nicht mehr zur Stabilisierung zur Verfügung steht. Beide Effekte können auch in Kombination auftreten, da vollverseifte Polyvinylalkohole im Allgemeinen einen niedrigeren Trübungspunkt aufweisen als teilverseifte.

Bei Temperaturen unterhalb von 100°C verlängert sich dahingegen die Betriebszeit für den Polymerisationsschritt erheblich, so dass dieser Temperaturbereich aus betriebswirtschaftlichen Gründen weniger gut geeignet ist.

Die Kühlkapazität K lässt sich durch die Gleichung (1) beschreiben. Sie ist proportional zu $\Delta T$ und dem Wärmeübergangskoeffizienten Ü sowie einer Konstanten W, die unter anderem auch die Wärmekapazitäten enthält. $\Delta T$

berechnet sich gemäß Gleichung (2). Das erfindungsgemäße Verfahren erlaubt, bedingt durch das größere ΔT zwischen Reaktortemperatur Tr und Kühlwassertemperatur Tk einen besseren Wärmetransport in das die Wärme abführende Medium.

$$K = \Delta T \, * \, \ddot{U} \, * \, W \hspace{4cm} (1)$$

$$\Delta T = Tr - Tk \hspace{4cm} (2)$$

Für das Basispolymerisat geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9R oder VeoVa10R (Handelsnamen der Firma Resolution Europe BV, Hoogvliet, The Netherlands). Besonders bevorzugt ist Vinylacetat.

Für das Basispolymerisat geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Für das Basispolymerisat geeignete Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0,05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden im erfindungsgemäßen Verfahren Homo- und Mischpolymerisate eingesetzt, die ausgewählt werden aus der Gruppe enthaltend, Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11 der Firma Resolution Europe BV, Hoogvliet, The Netherlands; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten; Mischpolymerisate mit Vinylacetat, 1 bis 40 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswahl beziehungsweise die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt Gleichung (3)

$$1/Tg = x1/Tg1 + x2/Tg2 + \ldots + xn/Tgn \qquad (3),$$

wobei xn für den Massebruch in Gew.-%/100 des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt nach dem Emulsionspolymerisationsverfahren, wobei die Startpolymerisationstemperatur im allgemeinen aber nicht notwendigerweise weniger als 100°C beträgt. Mindestens 60% des Gesamtumsatzes der Polymerisation, bevorzugt mindestens 70%, besonders bevorzugt mindestens 80% läuft bei Temperaturen von 100°C bis 140°C ab.

Die Initiierung der Polymerisation erfolgt mit den für die Emulsionspolymerisation gebräuchlichen wasserlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Die genannten Initiatoren werden im allgemeinen in einer Menge von 0,001 bis 0,02 Gew.-%, vorzugsweise 0,001 bis 0,01 Gew.-%, jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0,001 bis 0,03 Gew.-%, vorzugsweise 0,001 bis 0,015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, dann üblicherweise in Mengen zwischen 0,01 bis 5,0 Gew.-%, bezogen auf die zu polymerisierenden Monomeren, und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Geeignete Schutzkolloide sind Polyvinylalkohole.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4%-iger wässriger Lösung von 1 bis 30 mPas (Methode nach Höppler bei 20°C gemäß DIN 53015: 1978-09). Bevorzugt sind auch teilverseifte, hydrophob modifizierte Polyvinylalkohole mit einem Hydrolysegrad von 80 bis 95 Mol-% und einer Höpplerviskosität, in 4%-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4%-iger wässriger Lösung von 3 bis 15 mPas (Methode nach Höppler bei 20°C gemäß DIN 53015: 1978-09). Die genannten Schutzkolloide sind mittels dem Fachmann bekannter Verfahren zugänglich und werden im allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylaryl-lethersulfate mit 8 bis 18 C-Atomen im hydrophoben Rest und bis zu 40 Ethylen- oder Propylenoxideinheiten, Alkyl-oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Das erfindungsgemäße Verfahren erfolgt bevorzugt in Abwesenheit von Emulgatoren.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Gew.-%.

In Wasser redispergierbare Polymerpulver-Zusammensetzungen sind erhältlich durch anschließende Trocknung der durch das erfindungsgemäße Verfahren erhaltenen polyvinylalkoholstabilisierten Polymerdispersionen. Die Trocknung kann mit oder ohne Zusatz von Schutzkolloiden als Trocknungshilfe erfolgen. Trocknungsmethoden sind beispielsweise Wirbelschichttrocknung, Gefriertrocknung oder Sprühtrocknung. Bevorzugt erfolgt die Herstellung der Polymerpulver-Zusammensetzungen durch Sprühtrocknung der durch das erfindungsgemäße Verfahren erhaltenen polyvinylalkoholstabilisierten Polymerdispersionen.

Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe (Schutzkolloid) in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll 3 bis 30 Gew.-%, bezogen auf den Polymeranteil betragen; bevorzugt werden 5 bis 20 Gew.-%, bezogen auf den Polymeranteil eingesetzt.

Geeignete Trocknungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt, wobei die als Schutzkolloide bevorzugten Polyvinylalkohole auch bevorzugt als Verdüsungshilfe eingesetzt werden.

Bei der Verdüsung hat sich vielfach ein Gehalt von bis zu 1,5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel oder Antibackmittel, vorzugsweise bis 30 Gew.-%, bezogen auf das Gesamtgewicht polymerer Bestandteile, ausgerüstet werden. Beispiele für Antiblockmittel sind Ca- und Mg-Carbonat, Talk, Gips, Kieselsäure, Kaoline, Silicate mit Teilchengrößen vorzugsweise im Bereich von 10 nm bis 10 $\mu$m.

Die Viskosität der zu verdüsenden Speise wird über den Feststoffgehalt so eingestellt, dass ein Wert von weniger als 500 mPas, bestimmt mittels Brookfield-Viskosität bei 20 Umdrehungen und 23°C, bevorzugt weniger als 250 mPas, erhalten wird. Der Feststoffgehalt der zu verdüsenden Dispersion beträgt mindestens 35%, bevorzugt mindestens 40%.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die erfindungsgemäßen, in Wasser redispergierbaren Polymerpulver-Zusammensetzungen können in den dafür typischen Anwendungsbereichen eingesetzt werden. Beispielsweise in bauchemischen Produkten, in Verbindung mit hydraulisch abbindenden Bindemitteln, Zementen, beispielsweise Portland-, Aluminat-, Trass-, Hütten-, Magnesia-, Phosphatzement, Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Bevorzugte Anwendungsgebiete sind Spritzmörtel und Spritzbeton für Bauwerke des Hoch- und Tiefbaues sowie der Auskleidung von Tunnelwänden.

**Beispiele**

Dispersion D1: VAE (Vinylacetat-Ethylen-Copolymer) bei 120°C In einen Druckautoklaven werden 134 kg entionisiertes Wasser, 92 kg einer wässrigen Lösung eines Polyvinylalkoholes mit einem Verseifungsgrad von 88 Mol-% und einer Viskosität nach Höppler von 4 mPas und 227 kg Vinylacetat vorgelegt. Der pH Wert wird mit Ameisensäure auf ca. 4,0 eingestellt, dann werden 500g 1%ige Eisenammoniumsulfatlösung zugegeben. Anschließend wird der Autoklav auf 55°C aufgeheizt und mit Ethylen bis zu einem Druck von 8 bar befüllt. Die Polymerisation wird durch Zugabe von 3%iger Tert. Butylhydroperoxidlösung und 5%iger Ascorbinsäurelösung gestartet. Die Reaktionstemperatur wird mit Hilfe der freiwerdenden Polymerisationswärme auf die Zieltemperatur von 120°C angehoben. Der Ethylendruck wird mit steigender Temperatur nachgeführt und beträgt bei 85°C 38 bar, bei 120°C 55 bar. Bei Erreichen von 100°C beträgt der Umsatz 35%. 30 Minuten nach Reaktionsbeginn werden innerhalb von 60 Minuten 57 kg Vinylacetat und 35 kg einer wässrigen Lösung eines Polyvinylalkoholes mit einem Verseifungsgrad von 88 Mol-% und einer Viskosität nach Höppler von 4 mPas zudosiert. Nach beendeter Reaktion wird der Autoklav abgekühlt und restliches Ethylen entspannt. Die Copolymerzusammensetzung beträgt 92 Gew.-% Vinylacetat und 8 Gew.-% Ethylen.

Dispersion D2: VAE bei 135°C

Analog zum Beispiel 1. Die Temperatur wird aber bis auf 135°C angehoben.

Dispersion D3 (Vergleichsbeispiel): VAE bei 150°C

Analog zum Beispiel 1. Die Temperatur wird bis auf 150°C angehoben.
Die Dispersion koaguliert beim Abkühlen.

Dispersion D4 (Vergleichsbeispiel): VAE bei 80°C

Analog zum Beispiel 1. Die Temperatur wird nur bis auf 80°C angehoben.

Dispersion D5: Reinacrylat bei 135°C

In einen Autoklaven werden 140 kg entionisierter Wasser, 130 kg einer wässrigen Lösung eines Polyvinylalkoholes mit einem Verseifungsgrad von 88 Mol-% und einer Viskosität nach Höppler von 4 mPas, 78 kg Butylacrylat und 58 kg Methylmethacrylat vorgelegt. Der pH Wert wird mit Ameisensäure auf ca. 4,0 eingestellt, dann werden 100g 10%ige Eisenammoniumsulfatlösung zugegeben. Anschließend wird der Autoklav auf 65°C aufgeheizt. Die Polymerisation wird durch Zugabe von 3%iger Tert. Butylhydroperoxidlösung und 5%iger Ascorbinsäurelösung gestartet. Die Reaktionstemperatur wird mit Hilfe der freiwerdenden Polymerisationswärme auf die Zieltemperatur von 135°C angehoben. Bei Erreichen von 100°C beträgt der Umsatz 40%. 30 Minuten nach Reaktionsbeginn werden innerhalb von 60 Minuten 78 kg Butylacrylat und 58 kg Methylmethacrylat zudosiert. Nach beendeter Reaktion wird der Autoklav abgekühlt. Die Copolymerzusammensetzung beträgt 60 Gew.-% Butylacrylat und 40 Gew.-% Methylmethacrylat.

Dispersion D6 (Vergleichsbeispiel): Reinacrylat bei 80°C Analog Beispiel 5. Die Temperatur wird aber nur bis auf 80°C angehoben.

Dispersion D7 (Vergleichsbeispiel):

Durchführung analog zum Dispersionsbeispiel aus DE 103 35 958 A1, Seiten 11 bis 13, Abschnitte [0064] bis [0070].

Pulver P1-P7

Die Pulver wurden durch Sprühtrocknung der genannten Dispersion unter Zusatz von 8 Gew.-% eines Polyvinylalkoholes mit einem Verseifungsgrad von 88 Mol-% und einer Viskosität nach Höppler von 4 mPas hergestellt. Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% des handelsüblichen Antiblockmittels Calcium-Magnesium-Carbonat versetzt.

Ausprüfung:

Bestimmung der Rieselfähigkeit (RF):

Die Rieselfähigkeit wurde nur optisch über die Ausbildung des Schüttkegels beurteilt.

Bestimmung der Blockfestigkeit (BF):

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockfestigkeit qualitativ durch Zerdrücken des Pulvers bestimmt. Die Blockfestigkeit wurde wie folgt klassifiziert:

1-3 =     sehr gute Blockfestigkeit
4-6 =     gute Blockfestigkeit
7-8 =     befriedigende Blockfestigkeit
9-10 =    keine Blockfestigkeit, Pulver nach Zerdrücken nicht mehr rieselfähig.

Bestimmung des Absitzverhaltens (RA):

Das Absitzverhalten der Redispersion dient als Maß für die Redispergierbarkeit des Pulvers. Die Redispersionen wurden 50%-ig in Wasser durch Einwirkung von starken Scherkräften erzeugt. Das Absitzverhalten wurde dann an verdünnten Redispersionen (0,5 % Festgehalt) bestimmt, und dazu 100 ml dieser Dispersion in eine graduierte Röhre gefüllt, und die Absitzhöhe an Feststoff gemessen. Die Angabe erfolgt in mm Absitz nach 24 Stunden. Werte größer 7 zeigen eine unzureichende Redispersion des Pulvers an.

Die Ergebnisse der Prüfung der Rieselfähigkeit (RF), der Blockfestigkeit (BF) und des Absitzverhaltens (RA) der Redispersionspulver sind in Tabelle 1 zusammengefasst.

Tabelle 1

| Beispiel/Pulver | Polymerisations-Temperatur [°C] | BF | RA | RF |
|---|---|---|---|---|
| P1* | 120 | 3 | 1,2 | gut |
| P2* | 135 | 3 | 1,5 | gut |
| P3 | 150 | nicht messbar | nicht messbar | nicht messbar |
| P4 | 80 | 3 | 1,4 | gut |
| P5* | 135 | 4 | 1,8 | gut |
| P6 | 80 | 4 | 1,7 | gut |
| P7 | 120 | 9 | >7 | schlecht |
| * erfindungsgemäß | | | | |

Aus den Daten ist zu erkennen, dass die Pulvereigenschaften bei den erfindungsgemäßen Beispielen 1, 2 und 5 sehr gut sind.

Bestimmung der Haftzugfestigkeiten eines mit den Redispersionspulvern modifizierten, zementären Fliesenklebers:

Die Haftzugfestigkeiten im Fliesenkleber wurden in folgender Rezeptur überprüft (3% Polymeranteil):

| | |
|---|---|
| Quarzsand | 565 Teile |
| Portlandzement | 400 Teile |
| Cellulose | 5 Teile |
| Redispersionspulver | 30 Teile |

Es wurden die Haftzugfestigkeiten nach 3 Lagerbedingungen bestimmt:

| 28T: | 28 Tage Trockenlagerung |
| 7T/21N: | 7 Tage trocken/21 Tage nass (Nasslagerung) |
| 14T/14T +70°C/1T: | 14 Tage trocken/14 Tage trocken bei 70°C/1 Tag trocken |

Die Ergebnisse der Haftzugsfestigkeitsprüfung sind in Tabelle 2 zusammengefasst.

Tabelle 2

| Beispiel/Pulver | 28T [N/mm$^2$] | 7T/21N [N/mm$^2$] | 14T/14T+70°C/1T [N/mm$^2$] |
|---|---|---|---|
| P1* | 1,45 | 0,85 | 1,25 |
| P2* | 1,35 | 0,87 | 1,29 |
| P3 | nicht messbar | nicht messbar | nicht messbar |
| P4 | 1,39 | 0,88 | 1,22 |
| P5* | 1,15 | 0,64 | 1,10 |
| P6 | 1,10 | 0,65 | 1,05 |
| * erfindungsgemäß | | | |

Pulver P7 wurde wegen mangelnder Redispergierbarkeit nicht geprüft.

Die Ergebnisse der Prüfung zeigen, dass auch die anwendungstechnischen Eigenschaften durch das erfindungsgemäße Verfahren in den Beispielen 1, 2 und 5 nicht nachteilig verändert werden.

## Patentansprüche

1.  Verfahren zur Herstellung von in Wasser redispergierbaren Polymerpulver-Zusammensetzungen aus polyvinylalkoholstabilisierten Polymerdispersionen, hergestellt durch Emulsionspolymerisation bei Temperaturen nicht unter 140°C und Trocknung der damit erhaltenen polyvinylalkoholstabilisierten Polymerdispersionen mittels Wirbelschichttrocknung, Gefriertrocknung oder Sprühtrocknung, **dadurch gekennzeichnet, dass** in Abwesenheit von Emulgator polymerisiert wird, und als Initiatoren ausschließlich für die Emulsionspolymerisation gebräuchliche wasserlösliche Initiatoren oder Redox-Initiator-Kombinationen eingesetzt werden, und mindestens 60 % des Gesamtumsatzes der Emulsionspolymerisation bei einer Temperatur von 100°C bis 140°C abläuft, und die Reaktionstemperatur auf eine Zieltemperatur von mindestens 120°C angehoben wird.

2.  Verfahren gemäß Anspruch 1, **dadurch gekennzeichnet, dass** mindestens 70% des Gesamtumsatzes der Polymerisation bei einer Temperatur *von 100°C bis 140°C* abläuft.

3.  Verfahren gemäß einem der Ansprüche 1 oder 2, **dadurch gekennzeichnet, dass** mindestens 80% des Gesamtumsatzes der Polymerisation bei einer *Temperatur von 100°C bis 140°C* abläuft.

4.  Verfahren gemäß einem der Ansprüche 1 bis 3, **dadurch gekennzeichnet, dass** die eingesetzten Homo- oder Mischpolymerisate ausgewählt werden aus der Gruppe enthaltend Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

## Claims

1.  Process for preparing water-redispersible polymer powder compositions from polymer dispersions stabilized by polyvinyl alcohol, prepared by emulsion polymerization at temperatures not above 140°C and drying of the resulting polymer dispersions stabilized by polyvinyl alcohol by means of fluidized-bed drying, freeze drying or spray drying, **characterized in that** polymerization is carried out in the absence of emulsifier and the initiators used are exclusively water-soluble initiators or redox initiator combinations customary for emulsion polymerization and at least 60% of the total conversion in the emulsion polymerization occurs at a temperature of from 100°C to 140°C and the reaction temperature is raised to a target temperature of at least 120°C.

2. Process according to Claim 1, **characterized in that** at least 70% of the total conversion of the polymerization occurs at a temperature of from 100°C to 140°C.

3. Process according to either of Claims 1 and 2, **characterized in that** at least 80% of the total conversion of the polymerization occurs at a temperature of from 100°C to 140°C.

4. Process according to any of Claims 1 to 3, **characterized in that** the homopolymers or copolymers used are selected from the group consisting of vinyl acetate homopolymers, copolymers of vinyl acetate with ethylene, copolymers of vinyl acetate with ethylene and one or more further vinyl esters, copolymers of vinyl acetate with ethylene and acrylic esters, copolymers of vinyl acetate with ethylene and vinyl chloride, styrene-acrylic ester copolymers, styrene-1,3-butadiene copolymers.

**Revendications**

1. Procédé pour la préparation de compositions de poudres de polymères redispersables dans l'eau à partir de dispersions de polymères stabilisées avec du poly(alcool vinylique), préparées par polymérisation en émulsion à des températures n'excédant pas 140 °C et séchage des dispersions de polymères stabilisées avec du poly(alcool vinylique), ainsi obtenues, par séchage en lit fluidisé, lyophilisation ou séchage par atomisation, **caractérisé en ce qu'**on effectue la polymérisation en absence d'émulsifiant, et on utilise comme amorceurs exclusivement des associations amorceur-redox ou des amorceurs hydrosolubles usuels pour la polymérisation en émulsion, et au moins 60 % de la réaction totale de la polymérisation en émulsion se déroulent à une température de 100 °C à 140 °C, et la température de la réaction est élevée jusqu'à une température désirée d'au moins 120 °C.

2. Procédé selon la revendication 1, **caractérisé en ce qu'**au moins 70 % de la réaction totale de la polymérisation se déroulent à une température de 100 °C à 140 °C.

3. Procédé selon la revendication 1 ou 2, **caractérisé en ce qu'**au moins 80 % de la réaction totale de la polymérisation se déroulent à une température de 100 °C à 140 °C.

4. Procédé selon l'une quelconque des revendications 1 à 3, **caractérisé en ce que** les homopolymères ou copolymères utilisés sont choisis dans le groupe contenant des homopolymères d'acétate de vinyle, des copolymères d'acétate de vinyle avec l'éthylène, des copolymères d'acétate de vinyle avec l'éthylène et un ou plusieurs esters vinyliques supplémentaires, des copolymères d'acétate de vinyle avec l'éthylène et des esters d'acide acrylique, des copolymères d'acétate de vinyle avec l'éthylène et le chlorure de vinyle, des copolymères styrène/ester d'acide acrylique, des copolymères styrène/1,3-butadiène.

EP 1 788 001 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10335958 A1
- DE 19803098 A1

**In der Beschreibung aufgeführte Nicht-Patentliteratur**

- **FOX T. G.** *Bull. Am. Physics Soc.,* 1956, vol. 1 (3), 123
- Polymer Handbook. J. Wiley & Sons, 1975